# EUROPEAN PATENT APPLICATION

(11) **EP 4 733 549 A1**
(43) Date of publication of application: **29.04.2026**
(21) Application number: 25194506.9
(22) Date of filing: 07.08.2025
(51) Int. Cl.: F01D 5/14, F04D 29/32

(54) **BOOSTER ROTORS AND METHODS OF OPERATING GAS TURBINE ENGINES**

(30) Priority: 25.10.2024 US 202418926744
(71) Applicant: Honeywell International Inc., Charlotte, NC 28202 (US)
(72) Inventor: BARTON, Michael T., Charlotte, 28202 (US); GEBRE-GIORGIS, Yoseph, Charlotte, 28202 (US); NOLCHEFF, Nick, Charlotte, 28202 (US); REYNOLDS, Bruce, Charlotte, 28202 (US); GUNARAJ, John, Charlotte, 28202 (US)
(74) Representative: Ingrassia, Fisher & Lorenz UK Ltd.

(57) **Abstract**

Gas turbine engines, rotors thereof, methods for operating the gas turbine engines, and aircraft including the gas turbine engines are provided. The rotors (200) include rotor blades (202) each having an airfoil (202) extending from a root (210) to a tip (212) and having a leading edge (206) and a trailing edge (208), and a rotor disk (204) coupled to the rotor blades configured for rotation with a shaft and to receive a portion of a fluid flow from a fan. The airfoil is configured to have a first camber angle adjacent to the root that is greater than a second camber angle adjacent to the tip, wherein the difference therebetween is at least 15 degrees. The airfoil is configured to have a first stagger angle adjacent to the root that is less than a second stagger angle adjacent to the tip, wherein the difference therebetween is at least 10 degrees.

## Description

This invention was made with Government support under 693KA9-21-T-00004 awarded by Federal Aviation Administration. The Government has certain rights in this invention.

### TECHNICAL FIELD

The present disclosure generally relates to gas turbine engines, and more particularly relates to a booster rotor for a gas turbine engine booster stage having a rotor blade configured to provide an exit total pressure profile distribution with a reduced variation.

### BACKGROUND

Gas turbine engines may be employed to power various devices. For example, a gas turbine engine may be employed to power a mobile platform, such as an aircraft. Generally, gas turbine engines include systems with fan and compressor axial rotors, which are operable to draw air into the gas turbine engine and increase the static pressure of the fluid flowing within the gas turbine engine. For certain applications, it is desirable to provide a compressor system with an increased overall pressure ratio. For these applications, one or more booster stages (or sometimes referred to as T-stages) may be employed that include one or more booster rotors. The booster rotors may generate a modest pressure ratio which may allow for a reduction in the size and weight of the engine core.

Accordingly, there is an ongoing desire to provide a rotor, such as a booster rotor for a fan section of a gas turbine engine, which has improved operating performance and therefore promotes overall engine performance and/or reduces the requirements of other components of the engine. Furthermore, other desirable features and characteristics of the present invention will become apparent from the subsequent detailed description and the appended claims, taken in conjunction with the accompanying drawings and the foregoing technical field and background.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In various examples, a rotor is provided for a turbofan booster section associated with a fan section of a gas turbine engine. The fan section includes a fan driven by a shaft. The rotor is downstream from the fan and is driven by the same shaft as the fan, rotating at the same speed as the fan. The rotor includes rotor blades each having an airfoil extending from a root to a tip and having a leading edge and a trailing edge, and a rotor disk coupled to the rotor blades configured for rotation with the shaft to rotate with the shaft at the same speed as the shaft and to receive a portion of a fluid flow from the fan. The airfoil is configured to have a first camber angle adjacent to the root that is greater than a second camber angle adjacent to the tip, wherein the difference between the first camber angle and the second camber angle is at least 15 degrees. The airfoil is configured to have a first stagger angle adjacent to the root that is less than a second stagger angle adjacent to the tip, wherein the difference between the first stagger angle and the second stagger angle is at least 10 degrees.

In various examples, a method is provided for operating a gas turbine engine. The method includes receiving a fluid from a fan section of the gas turbine engine, wherein the fluid is propelled by a fan of the fan section that is driven by a shaft; operating a rotor downstream from the fan to modify a flow of the fluid, and directing the fluid from the rotor to a downstream section of the gas turbine engine. The rotor includes rotor blades each having an airfoil extending from a root to a tip and having a leading edge and a trailing edge, and a rotor disk coupled to the rotor blades configured for rotation with the shaft to rotate with the shaft at the same speed as the shaft. The airfoil is configured to have a first camber angle adjacent to the root that is greater than a second camber angle adjacent to the tip, wherein the difference between the first camber angle and the second camber angle is at least 15 degrees. The airfoil is configured to have a first stagger angle adjacent to the root that is less than a second stagger angle adjacent to the tip, wherein the difference between the first stagger angle and the second stagger angle is at least 10 degrees.

In various examples, an aircraft is provided that includes a gas turbine engine configured to provide propulsion for the aircraft, the gas turbine engine having a fan section, a compressor section, a combustion section, a turbine section and an exhaust section, a fan in the fan section configured to be driven by a shaft, and a rotor downstream from the fan. The rotor includes rotor blades each having an airfoil extending from a root to a tip and having a leading edge and a trailing edge, and a rotor disk coupled to the rotor blades configured for rotation with the shaft to rotate with the shaft at the same speed as the shaft and to receive a portion of a fluid flow from the fan. The airfoil is configured to have a first camber angle adjacent to the root that is greater than a second camber angle adjacent to the tip, wherein the difference between the first camber angle and the second camber angle is at least 15 degrees. The airfoil is configured to have a first stagger angle adjacent to the root that is less than a second stagger angle adjacent to the tip, wherein the difference between the first stagger angle and the second stagger angle is at least 10 degrees.

Furthermore, other desirable features and characteristics of the rotor, method, and aircraft will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a cross-sectional view of a gas turbine engine, which includes an exemplary booster rotor and rotor blade in accordance with aspects of an embodiment;
FIG. 2 is a cross-sectional view of the booster rotor and rotor blade of FIG. 1, taken at 2 of FIG. 1, in which the rotor blade has blade angles, camber angles, and/or stagger in accordance with aspects of an embodiment;
FIG. 3 is a cross-sectional view of the rotor blade of FIG. 2, taken along line 3-3 of FIG. 2;
FIG. 4 is a graph of blade angles relative to percent span of the rotor blade of FIG. 3;
FIG. 5 is a graph of camber angles relative to percent span of the rotor blade of FIG. 3;
FIG. 6 is a graph of stagger angles relative to percent span of the rotor blade of FIG. 3;
FIG. 7 is a graph of exit total pressure profile relative to percent span of the rotor blade of FIG. 3; and
FIG. 8 is a method for operating a gas turbine engine having an exemplary booster rotor and rotor blade in accordance with aspects of an embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

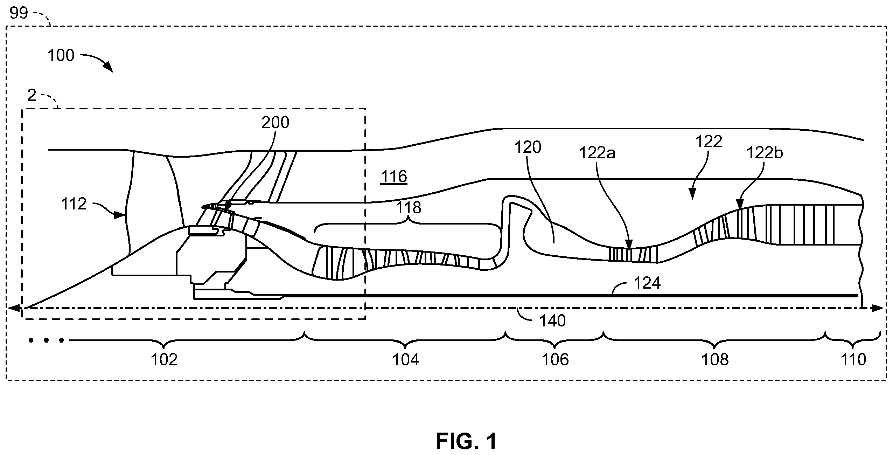

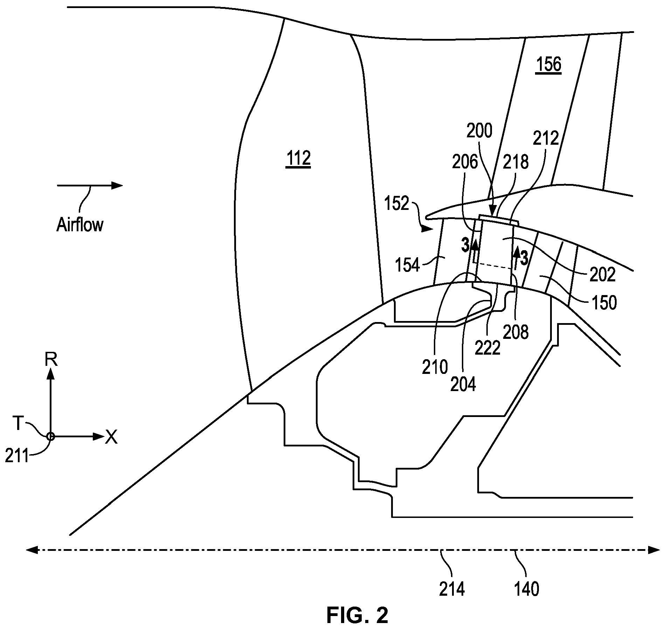

With reference to FIG. 1, a partial, cross-sectional view of an exemplary gas turbine engine 100 is shown with the remaining portion of the gas turbine engine 100 being generally axisymmetric about a longitudinal axis 140, which also comprises an axis of rotation or centerline for the rotating components in the gas turbine engine 100. In the depicted embodiment, the gas turbine engine 100 is an annular multi-spool turbofan gas turbine jet engine within an aircraft 99, although other arrangements and uses may be provided. As will be discussed herein, with brief reference to FIG. 2, the gas turbine engine 100 includes a booster rotor 200 including a plurality of rotor blades 202. In one example, the plurality of rotor blades 202 have a characteristic distribution, such as a trailing edge angle distribution, a camber angle distribution, and/or a stagger angle distribution. By providing the one or more of these characteristic distributions, the booster rotor 200 has increased efficiency and stability in view of the exit total pressure profile during operation. Camber refers to a change in angle of an airfoil from a leading edge to a trailing edge thereof.

In this example, with reference back to FIG. 1, the gas turbine engine 100 includes fan and booster section 102, a compressor section 104, a combustor section 106, a turbine section 108, and an exhaust section 110. In one example, the fan and booster section 102 includes a fan rotor 112, which draws air into the gas turbine engine 100 and accelerates it. A portion of the accelerated air exhausted from the fan rotor 112 is directed through an outer (or first) bypass duct 116 and the remaining portion of air exhausted from the fan rotor 112 is directed toward the booster rotor 200 and subsequently into the compressor section 104. In this example, the fan and booster section 102 also includes the booster rotor 200 downstream of the fan rotor 112, as will be discussed further herein. The compressor section 104 includes one or more compressors 118. The number of compressors 118 in the compressor section 104 and the configuration thereof may vary. The one or more compressors 118 sequentially raise the pressure of the air and direct a majority of the high pressure air into the combustor section 106. A fraction of the compressed air bypasses the combustor section 106 and is used to cool, among other components, turbine blades in the turbine section 108.

In the embodiment of FIG. 1, in the combustor section 106, which includes a combustion chamber 120, the high pressure air is mixed with fuel, which is combusted. The high-temperature combustion air is directed into the turbine section 108. In this example, the turbine section 108 includes one or more turbines 122 disposed in axial flow series. In one example, the one or more turbines 122 may include one or more high pressure turbines 122a and one or more low pressure turbines 122b. It will be appreciated that the number of turbines, and/or the configurations thereof, may vary. The combustive gas expands through and rotates the turbines 122. The combustive gas flow then exits turbine section 108 for mixture with the cooler bypass airflow from the outer bypass duct 116 and is ultimately discharged from gas turbine engine 100 through exhaust section 110. As the turbines 122 rotate, each drives equipment in the gas turbine engine 100 via concentrically disposed shafts or spools. In one example, with additional reference to FIG. 2, the fan rotor 112 is connected directly to a low pressure turbine shaft 124 through a fan stub-shaft 125, and the booster rotor 200 is coupled to the fan rotor 112 through a connection 126. As such, the fan rotor 112 and the booster rotor 200 rotate at the same speed as each other and at the same speed as the low pressure turbines 122b of the turbines 122 in a "direct drive" configuration. Still in other cases, the fan stub-shaft 125 is coupled to the low pressure turbine shaft 124 indirectly through a speed reduction gearbox (not shown), such that the rotational speed of the fan rotor 112, the booster rotor 200 and the fan stub-shaft 125 are each lower than the rotational speed of the low pressure turbine shaft 124 in a "geared" configuration. Regardless of the configuration, the fan rotor 112 and the booster rotor 200 rotate at the same speed and are not limited to direct drive or geared configurations.

With reference to FIG. 2, the booster rotor 200 is shown in greater detail. In the example of FIG. 2, the booster rotor 200 is a booster axial rotor, which functions with a booster stator 150 to form a booster stage 152. The booster stage 152 is part of a turbofan booster section of the fan and booster section 102. The booster stage 152 is downstream from a fan core stator 154, which is downstream from the fan rotor 112. The fan core stator 154 receives the portion of the fluid flow or core flow from the fan rotor 112 to direct the portion of the fluid flow into the compressor section 104. A fan bypass stator 156 is also downstream of the fan rotor 112, and receives the portion of the fluid flow or bypass flow from the fan rotor 112 into the outer bypass duct 116. In this example, the gas turbine engine 100 is shown with a single booster stage 152, however, it will be understood that the gas turbine engine 100 may include additional booster stages 152. The booster rotor 200 is downstream from the fan rotor 112, and receives a portion of the fluid flow from the fan rotor 112, which is directed from the fan rotor 112 through the fan core stator 154 to the booster stage 152.

The booster rotor 200 includes a rotor disk 204 and in this example, a plurality of rotor blades 202 that are spaced apart about a perimeter or circumference of the rotor disk 204. For ease of illustration, one of the plurality of rotor blades 202 for use with the booster rotor 200 of the gas turbine engine 100 is shown. Each of the rotor blades 202 may be referred to as an "airfoil 202." Each airfoil 202 extends in a radial direction (relative to the longitudinal axis 140 of the gas turbine engine 100) about the periphery of the rotor disk 204. The airfoils 202 each include a leading edge 206, an axially-opposed trailing edge 208, a base or root 210, and a radially-opposed tip 212. The tip 212 is spaced from the root 210 in a blade height, span or spanwise direction, which generally corresponds to the radial direction or R-axis of a coordinate legend 211 in the view of FIG. 2. In this regard, the radial direction or R-axis is radially outward and orthogonal to the axial direction or X-axis, and the axial direction or X-axis is parallel to the longitudinal axis 140 or axis of rotation of the gas turbine engine 100. A tangential direction or T-axis is mutually orthogonal to the R-axis and the X-axis. The booster rotor 200 includes multiple airfoils 202 which are spaced about a rotor rotational axis 214. The rotor rotational axis 214 is substantially parallel to and collinear with the longitudinal axis 140 of the gas turbine engine 100.

The span S of each of the airfoils 202 is 0% at the root 210 (where the airfoil 202 is coupled to a rotor hub 222) and is 100% at the tip 212. In this example, the airfoils 202 are arranged in a ring or annular array surrounded by an annular housing piece 218, which defines a pocket for an abradable coating. The airfoils 202 and the rotor disk 204 are generally composed of a metal, metal alloy or a polymer-based material, such as a polymer-based composite material. In one example, the airfoils 202 are integrally formed with the rotor disk 204 as a monolithic or single piece structure commonly referred to as a bladed disk or "blisk." In other examples, the airfoils 202 may be insert-type blades, which are received in mating slots provided around the outer periphery of rotor disk 204. In still further examples, the booster rotor 200 may have a different construction. Generally, then, it should be understood that the booster rotor 200 is provided by way of nonlimiting example and that the booster rotor 200 (and the airfoils 202 described herein) may be fabricated utilizing various different manufacturing approaches. Such approaches may include, but are not limited to, casting and machining, three dimensional metal printing processes, direct metal laser sintering, Computer Numerical Control (CNC) milling of a preform or blank, investment casting, electron beam melting, binder jet printing, powder metallurgy and ply lay-up, to list but a few examples. Regardless of its construction, the booster rotor 200 includes the rotor hub 222 defining a booster hub flow path. The booster hub flow path is the outer surface of the rotor disk 204 and extends between the airfoils 202 to guide airflow along from the inlet end (leading edge) to the outlet end (trailing edge) of the booster rotor 200.

As shown in FIG. 2, each of the plurality of airfoils 202 is coupled to the rotor hub 222 at the root 210 (0% span). It should be noted that while each of the plurality of airfoils 202 are illustrated herein as being coupled to the rotor hub 222 with a fillet that defines a curvature relative to the axial direction (X-axis), one or more of the plurality of airfoils 202 may be coupled to the rotor hub 222 with a fillet along a straight line. Further, it should be noted that one or more of the plurality of airfoils 202 may be coupled to the rotor hub 222 along a complex curved surface. It should be noted that in the instances where the plurality of airfoils 202 are coupled to the rotor hub 222 at an angle with the fillet, the span remains at 0% at the root 210. In other words, the span of each of the plurality of airfoils 202 remains at 0% at the root 210 regardless of the shape of the fillet.

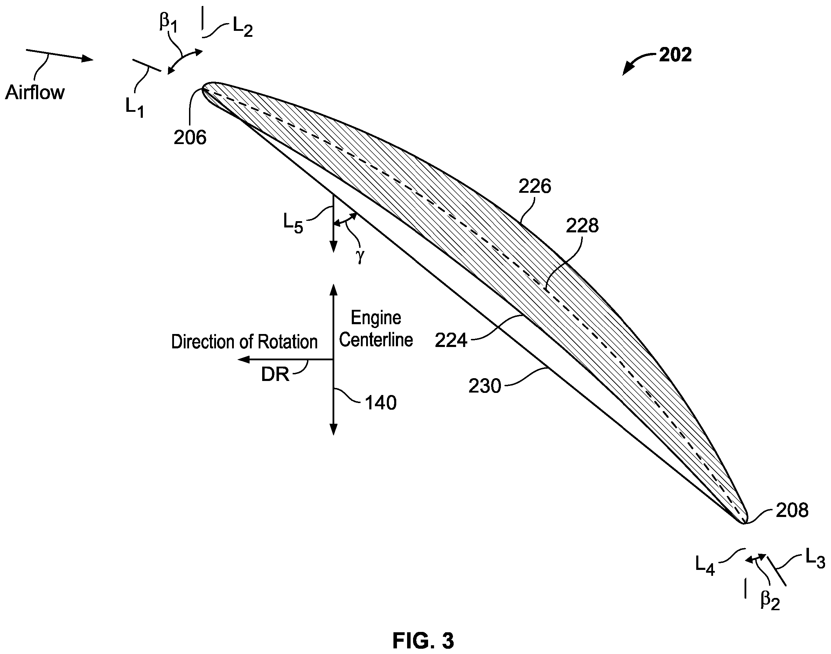

With reference to FIG. 3, each of the airfoils 202 further includes a first principal face or a "pressure side" 224 and a second, opposing face or a "suction side" 226. The pressure side 224 and the suction side 226 extend in a chordwise direction along a chord line 230 and are opposed in a thickness direction normal to a mean camber line 228, which is illustrated as a dashed line in FIG. 3 that extends from the leading edge 206 to the trailing edge 208. The chord line 230 has a chord length, which is a numerical value for a distance along a straight line that connects the leading edge 206 to the trailing edge 208 at the particular spanwise location of the airfoil 202. Based on the predetermined shape of the airfoil 202, the value of the chord length may vary in a spanwise direction (from 0% span to 100% span) over the airfoil 202. The pressure side 224 and the suction side 226 extend from the leading edge 206 to the trailing edge 208. In one example, each of the airfoils 202 is somewhat asymmetrical and cambered along the mean camber line 228. The pressure side 224 has a contoured, generally concave surface geometry, which gently bends or curves in three dimensions. The suction side 226 has a contoured, generally convex surface geometry, which likewise bends or curves in three dimensions.

In this example, each one of the airfoils 202 has a plurality of chord lines 230, with each of the plurality of chord lines 230 having a respective value or chord length at a particular spanwise location of the airfoil 202. In this example, the plurality of chord lines 230 are spaced apart from 0% span at the root 210 to 100% span at the tip 212, with the direction from the root 210 (0% span) to the tip 212 (100%) considered the spanwise direction. Thus, the airfoil 202 has the plurality of chord lines 230 spaced apart in the spanwise direction from 0% span at the root to 100% span at the tip.

In one example, each of the airfoils 202 has a leading edge blade angle β1 (also referred to as the leading edge metal angle) defined at the leading edge 206. The leading edge blade angle β1 is the angle between a reference line L1 that is tangent to the mean camber line 228 at the leading edge 206 and a reference line L2 that is parallel to the engine center line or the longitudinal axis 140 of the gas turbine engine 100 (FIGS. 1-3) and normal to the direction of rotation DR. Each of the airfoils 202 also have a trailing edge blade angle β2 (also referred to as the trailing edge metal angle) defined at the trailing edge 208. The trailing edge blade angle β2 is the angle between a reference line L3 that is tangent to the mean camber line 228 at the trailing edge 208 and a reference line L4 that is parallel to the engine center line or the longitudinal axis 140 of the gas turbine engine 100 (FIGS. 1-3) and normal to the direction of rotation DR. Generally, for a particular span of the airfoil 202, each of the airfoils 202 have a respective leading edge blade angle β1 and trailing edge blade angle β2.

In various examples, the leading edge blade angle β1 varies over the span S of the airfoil 202 by less than 5 degrees, such as less than 4 degrees, such as less than 3 degrees, such as less than 2.5 degrees. In various examples, the trailing edge blade angle β2 varies over the span S of the airfoil 202 by more than 10 degrees, such as more than 15 degrees, such as more than 18 degrees, such as 19 degrees or more.

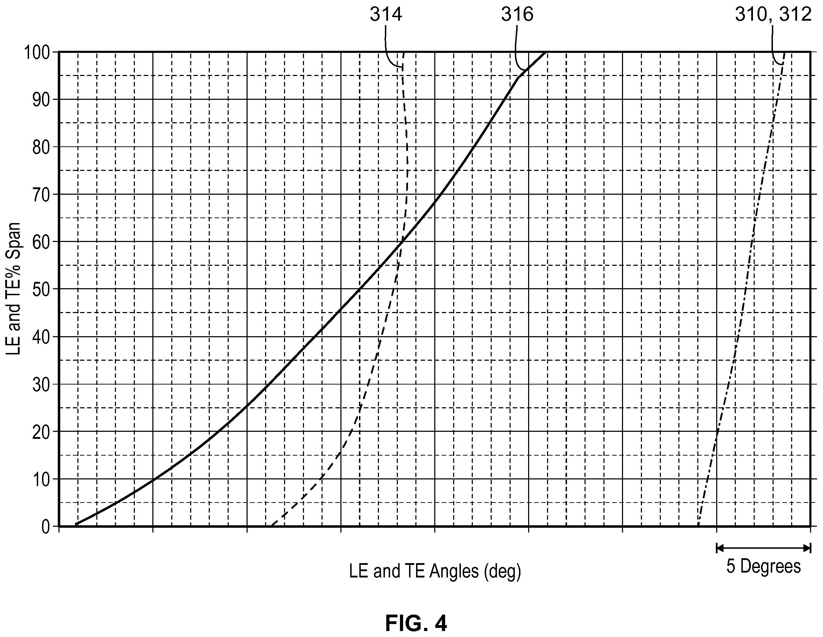

In one example, with reference to FIG. 4, a graph shows the blade angle distribution along the span S of each of the airfoils 202 as compared to an airfoil of a conventional booster rotor. In FIG. 4, the horizontal axis represents the blade angles and the vertical axis represents the spanwise location or location along the span S of each of the airfoils (span is 0% at the root 210 (FIG. 2) and span is 100% at the tip 212 (FIG. 2)). In FIG. 4, the blade angle distribution of the leading edge of the conventional airfoil is represented by 310, the blade angle distribution of the leading edge of the airfoil 202 is represented by 312, the blade angle distribution of the trailing edge of the conventional airfoil is represented by 314, and blade angle distribution of the trailing edge of the airfoil 202 is represented by 316. In this example, the leading edge blade angle β1 of the airfoil 202 ranges by about 4.5 degrees and the trailing edge blade angle β2 ranges from about 25 degrees. More specifically, the leading edge blade angle β1 of the airfoil 202 increases by about 1.0 degree from 0% span to 20% span, about 1.5 degrees from 20% span to 50% span, about 1.0 degrees from 50% span to 70% span, and about 1.0 degree from 70% span to 100% span. The trailing edge blade angle β2 of the airfoil 202 increases by about 7.5 degrees from 0% span to 20% span, about 7.5 degrees from 20% span to 50% span, about 4.5 degrees from 50% span to 70% span, and about 5.5 degrees from 70% span to 100% span.

In this example, each of the plurality of chord lines 230 has an associated camber angle. The camber angle is defined as the leading edge blade angle β1 minus the trailing edge blade angle β2. In various examples, the camber angle varies over the span S of the airfoil 202 by 15 degrees or more, such as 20 degrees or more.

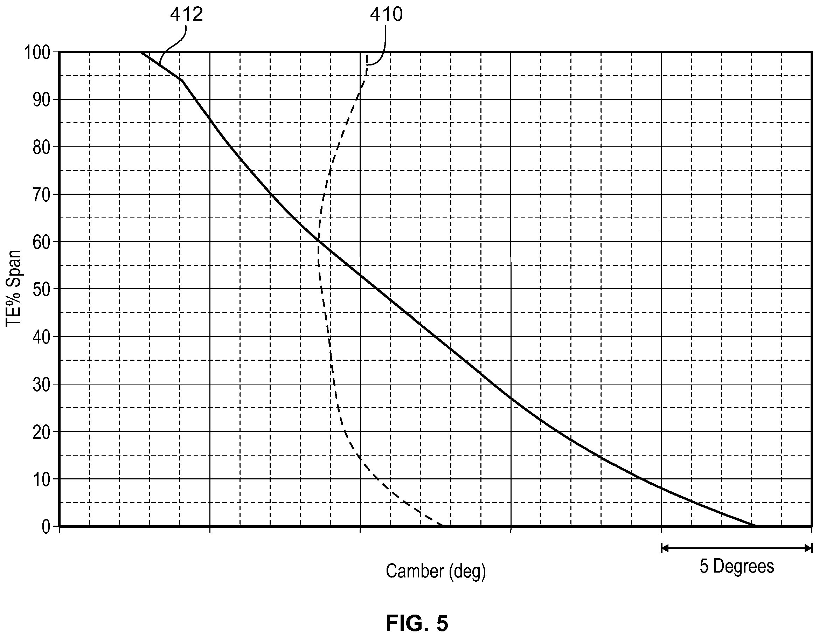

In one example, with reference to FIG. 5, a graph shows the camber angle distribution along the span S of each of the airfoils 202 as compared to the airfoil of the conventional booster rotor. In FIG. 5, the horizontal axis is the camber angle and the vertical axis is the spanwise location or location along the span S of each of the airfoils 202 (span is 0% at the root 210 (FIG. 2) and span is 100% at the tip 212 (FIG. 2)). In FIG. 5, the camber angle distribution of the conventional airfoil is represented by 410, and the camber angle distribution of the airfoil 202 is represented by 412. In this example, the camber angle ranges by about 20 degrees. More specifically, the camber angle decreases by about 6.5 degrees from 0% span to 20% span, about 6.0 degrees from 20% span to 50% span, about 3.5 degrees from 50% span to 70% span, and about 4.0 degrees from 70% span to 100% span.

With reference back to FIG. 3, each one of the airfoils 202 also has a plurality of chord lines 230, with each of the plurality of chord lines 230 defined at a particular spanwise location of the airfoil 202. The plurality of chord lines 230 are spaced apart from 0% span at the root 210 to 100% span at the tip 212, with the direction from the root 210 (0% span) to the tip 212 (100%) considered the spanwise direction. In this example, each of the plurality of chord lines 230 has an associated stagger angle y. The stagger angle y is defined as an angle formed between the particular chord line 230 and a fifth reference line L5 that is tangent to the chord line 230 and parallel to the engine centerline or longitudinal axis 140. In some examples, the stagger angle y varies over the span S of the airfoil 202 by greater than about 10 degrees, such as about 14 degrees or more.

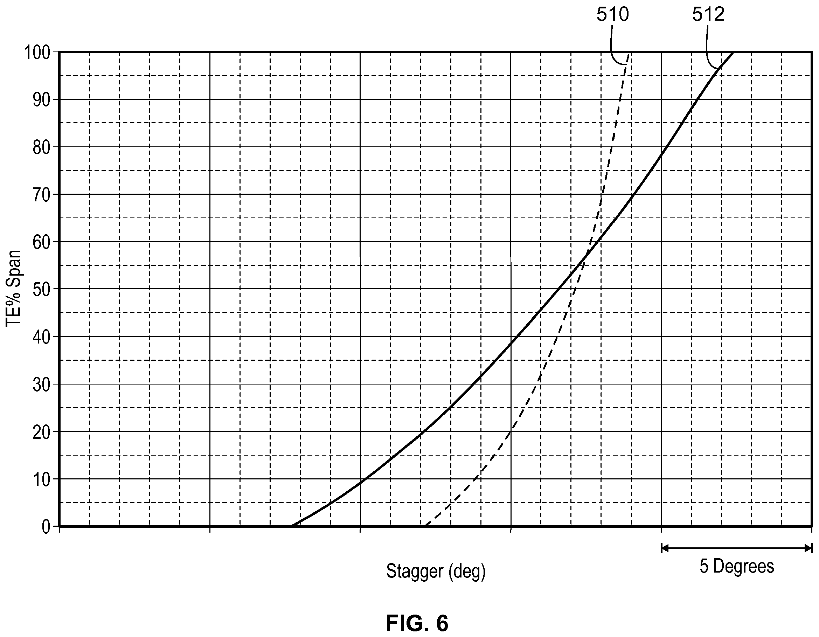

In one example, with reference to FIG. 6, a graph shows the stagger angle distribution along the span S of each of the airfoils 202 as compared to the airfoil of the conventional booster rotor. In FIG. 6, the horizontal axis is the stagger angle y and the vertical axis is the spanwise location or location along the span S of each of the airfoils 202 (span is 0% at the root 210 (FIG. 2) and span is 100% at the tip 212 (FIG. 2)). In FIG. 6, the stagger angle distribution of the conventional airfoil is represented by 510, and the stagger angle distribution of the airfoil 202 is represented by 512. In this example, the stagger angle y ranges by about 14.5 degrees. More specifically, the stagger angle y increases by about 3.0 degrees from 0% span to 20% span, about 4.5 degrees from 20% span to 50% span, about 2.5 degrees from 50% span to 70% span, and about 3.5 degrees from 70% span to 100% span.

In some examples, the booster rotor 200 includes the airfoils 202 that include a combination of camber angles, stagger angles, and/or blade angles within the ranges noted above. For example, the airfoil 202 may include a camber angle that varies over the span S of the airfoil 202 by 15 degrees or more, and a stagger angle y that varies over the span S of the airfoil 202 by greater than about 10 degrees. In another example, the airfoil 202 may include a camber angle that varies over the span S of the airfoil 202 by 15 degrees or more, a stagger angle y that varies over the span S of the airfoil 202 by greater than about 10 degrees, a leading edge blade angle β1 that varies over the span S of the airfoil 202 by less than 5 degrees, and a trailing edge blade angle β2 that varies over the span S of the airfoil 202 by more than 10 degrees.

During operation of the booster rotor 200, each of the airfoils 202 may produce an exit total pressure profile that varies over the spans S thereof. The exit total pressure profile may be defined as a pressure (Pt) at the trailing edge 208 of a specific one of the plurality of chord lines 230 divided by the average pressure (Ptavg) at the trailing edge 208 of the airfoil 202. In various examples, airfoils that include camber angles, stagger angles, and/or blade angles within the ranges noted above may provide an exit total pressure profile distribution that has less variation over the span S of the airfoil 202 relative to certain existing booster rotor airfoils, especially in the 20% to 70% span of the airfoil 202.

In some examples, the exit total pressure profile of the airfoil 202 between about 20 percent span to about 70 percent span varies by 0.06 or less, such as 0.05 or less, such as 0.04 or less. In some examples, the exit total pressure profile at the 20 percent spanwise location of the airfoil 202 is about 0.96 to about 1.0, about 0.97 to about 0.99, such as about 0.98. In some examples, the exit total pressure profile at the 70 percent spanwise location of the airfoil 202 is about 1.01 to about 1.03, about 1.015 to about 1.025, such as about 1.02.

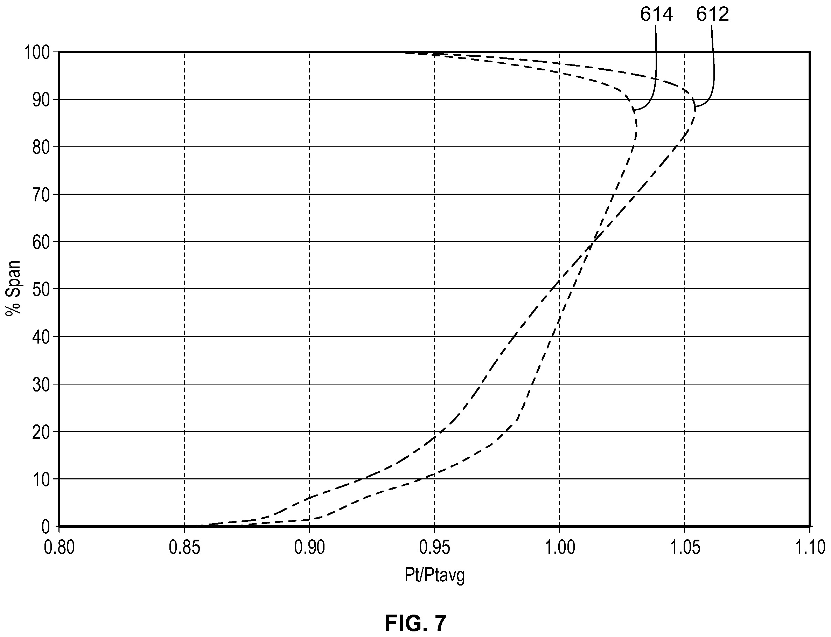

In one example, with reference to FIG. 7, a graph shows the exit total pressure profile distribution along the span S of each of the airfoils 202 as compared to the airfoil of the conventional booster rotor and to a theoretical ideal airfoil. In FIG. 7, the horizontal axis is the exit total pressure profile and the vertical axis is the spanwise location or location along the span S of each of the airfoils (span is 0% at the root 210 (FIG. 2) and span is 100% at the tip 212 (FIG. 2)). In FIG. 7, the exit total pressure profile distribution of the conventional airfoil is represented by 612 and the exit total pressure profile distribution of the airfoil 202 is represented by 614. In this example, the exit total pressure profile ranges from about 0.87 to about 1.03. More specifically, the exit total pressure profile is about 0.87 at 0% span, about 0.98 at 20% span, about 1.0125 at 50% span, about 1.02 at 70% span, and about 0.93 at 100% span, with a maximum of about 1.03 at about 85% span.

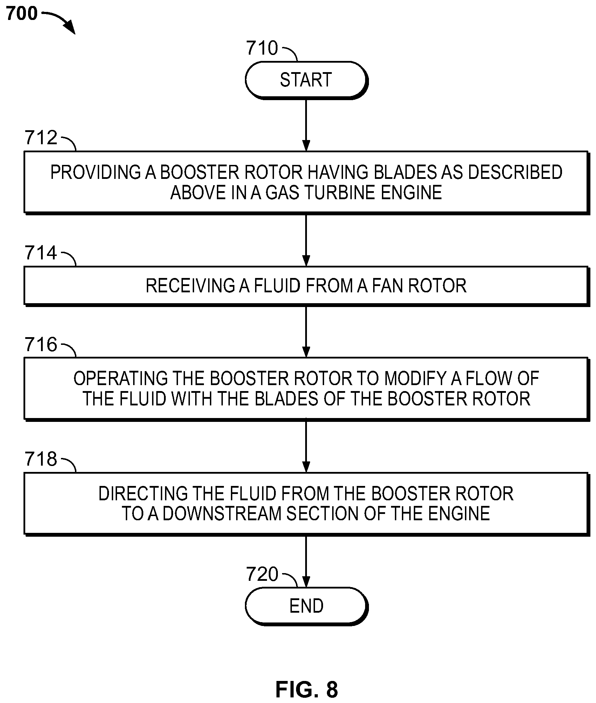

The booster rotors disclosed herein, including the booster rotor 200, provide for methods of operating gas turbine engines, such as the gas turbine engine 100. For example, FIG. 8 is a flowchart illustrating an exemplary method 700. The method 700 may start at 310. At 712, the method 700 may include providing a booster rotor having blades as described above in a gas turbine engine. At 714, the method 700 may include receiving a fluid from a fan rotor. At 716, the method 700 may include operating the booster rotor to modify a flow of the fluid with the blades of the booster rotor. For example, the booster rotor may be used to increase a pressure of the fluid. At 718, the method 700 may include directing the fluid from the booster rotor to a downstream section of the engine, such as a compressor section. The method 700 may end at 720.

The booster rotors, gas turbine engines, and methods disclosed herein provide various benefits over certain existing booster rotors, gas turbine engines, and methods. For example, the booster rotors disclosed herein, such as the booster rotor 200, may produce an exit total pressure profile distribution along the span of the blades thereof 202 with less variation relative to certain existing booster rotors. This in turn may promote improved core compressor performance and stability.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "axial" refers to a direction that is generally parallel to or coincident with an axis of rotation, axis of symmetry, or centerline of a component or components. For example, in a cylinder or disc with a centerline and generally circular ends or opposing faces, the "axial" direction may refer to the direction that generally extends in parallel to the centerline between the opposite ends or faces. In certain instances, the term "axial" may be utilized with respect to components that are not cylindrical (or otherwise radially symmetric). For example, the "axial" direction for a rectangular housing containing a rotating shaft may be viewed as a direction that is generally parallel to or coincident with the rotational axis of the shaft. Furthermore, the term "radially" as used herein may refer to a direction or a relationship of components with respect to a line extending outward from a shared centerline, axis, or similar reference, for example in a plane of a cylinder or disc that is perpendicular to the centerline or axis. In certain instances, components may be viewed as "radially" aligned even though one or both of the components may not be cylindrical (or otherwise radially symmetric). Furthermore, the terms "axial" and "radial" (and any derivatives) may encompass directional relationships that are other than precisely aligned with (e.g., oblique to) the true axial and radial dimensions, provided the relationship is predominantly in the respective nominal axial or radial direction. As used herein, the term "substantially" denotes within 5% to account for manufacturing tolerances. Also, as used herein, the term "about" denotes within 5% to account for manufacturing tolerances.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A rotor for a turbofan booster section associated with a fan section of a gas turbine engine, the fan section including a fan driven by a shaft, the rotor downstream from the fan, and the rotor comprising:
rotor blades each having an airfoil extending from a root to a tip and having a leading edge and a trailing edge; and
a rotor disk coupled to the rotor blades configured for rotation with the shaft to rotate with the shaft at the same speed as the shaft and to receive a portion of a fluid flow from the fan,
wherein the airfoil is configured to have a first camber angle adjacent to the root that is greater than a second camber angle adjacent to the tip, wherein the difference between the first camber angle and the second camber angle is at least 15 degrees,
wherein the airfoil is configured to have a first stagger angle adjacent to the root that is less than a second stagger angle adjacent to the tip, wherein the difference between the first stagger angle and the second stagger angle is at least 10 degrees.

2. The rotor of claim 1, wherein the difference between the first camber angle and the second camber angle is at least 20 degrees, wherein the difference between the first stagger angle and the second stagger angle is at least 14 degrees.

3. The rotor of claim 1, wherein the airfoil is configured to have a first trailing edge blade angle adjacent to the root and a second trailing edge blade angle adjacent to the tip, wherein the difference between the first trailing edge blade angle and the second trailing edge blade angle is 10 degrees or more.

4. The rotor of claim 1, wherein the airfoil is configured to have a first trailing edge blade angle adjacent to the root and a second trailing edge blade angle adjacent to the tip, wherein the difference between the first trailing edge blade angle and the second trailing edge blade angle is 15 degrees or more.

5. The rotor of claim 1, wherein the airfoil is configured to have a first trailing edge blade angle adjacent to the root and a second trailing edge blade angle adjacent to the tip, wherein the difference between the first trailing edge blade angle and the second trailing edge blade angle is 10 degrees or more, wherein the difference between the first camber angle and the second camber angle is at least 20 degrees, wherein the difference between the first stagger angle and the second stagger angle is at least 14 degrees.

6. The rotor of claim 1, wherein the airfoil is configured to have a first leading edge blade angle adjacent to the root and a second leading edge blade angle adjacent to the tip, wherein the difference between the first leading edge blade angle and the second leading edge blade angle is 5 degrees or less.

7. The rotor of claim 1, wherein the airfoil is configured to have a first leading edge blade angle adjacent to the root and a second leading edge blade angle adjacent to the tip, wherein the difference between the first leading edge blade angle and the second leading edge blade angle is 3 degrees or less.

8. The rotor of claim 1, wherein the airfoil is configured to produce an exit total pressure profile (Pt/Pt_{avg}) that varies by less than 0.06 between about 20 percent span to about 70 percent span of the airfoil.

9. The rotor of claim 1, wherein the airfoil is configured to produce an exit total pressure profile (Pt/Pt_{avg}) that varies by 0.04 or less between about 20 percent span to about 70 percent span of the airfoil.

10. The rotor of claim 1, wherein the exit total pressure profile is about 0.96 to about 1.0 at 20 percent span and about 1.01 to about 1.03 at 70 percent span.

11. A method for operating a gas turbine engine, comprising:
receiving a fluid from a fan section of the gas turbine engine, wherein the fluid is propelled by a fan of the fan section that is driven by a shaft; and
operating a rotor downstream from the fan to modify a flow of the fluid, wherein the rotor includes:
rotor blades each having an airfoil extending from a root to a tip and having a leading edge and a trailing edge; and
a rotor disk coupled to the rotor blades configured for rotation with the shaft to rotate with the shaft at the same speed as the shaft,
wherein the airfoil is configured to have a first camber angle adjacent to the root that is greater than a second camber angle adjacent to the tip, wherein the difference between the first camber angle and the second camber angle is at least 15 degrees,
wherein the airfoil is configured to have a first stagger angle adjacent to the root that is less than a second stagger angle adjacent to the tip, wherein the difference between the first stagger angle and the second stagger angle is at least 10 degrees; and
directing the fluid from the rotor to a downstream section of the gas turbine engine.

12. The method of claim 11, wherein the difference between the first camber angle and the second camber angle is at least 20 degrees.

13. The method of claim 11, wherein the difference between the first stagger angle and the second stagger angle is at least 14 degrees.

14. The method of claim 11, wherein the airfoil is configured to have a first trailing edge blade angle adjacent to the root and a second trailing edge blade angle adjacent to the tip, wherein the difference between the first trailing edge blade angle and the second trailing edge blade angle is 10 degrees or more.

15. The method of claim 11, wherein the airfoil is configured to produce an exit total pressure profile (Pt/Pt_{avg}) that varies by less than 0.06 between about 20 percent span to about 70 percent span of the airfoil.
